# EUROPÄISCHE PATENTSCHRIFT

(11) **EP 1 286 862 B1**
(45) Veröffentlichungstag und Bekanntmachung des Hinweises auf die Patenterteilung: **14.09.2005**
(21) Anmeldenummer: 01937976.7
(22) Anmeldetag: 07.04.2001
(51) Int. Cl.: B60R 16/02, H04L 9/32, H04L 29/06

(54) **VERFAHREN ZUM ZUGRIFF AUF EIN GERÄT EINES KOMMUNIKATIONSNETZES IN EINEM KRAFTFAHRZEUG**
METHOD FOR ACCESSING A DEVICE BELONGING TO A COMMUNICATIONS NETWORK IN AN AUTOMOBILE THROUGH AN EXTERNAL DEVICE, AND GATEWAY
PROCEDE D'ACCES A UN APPAREIL D'UN RESEAU DE COMMUNICATION DANS UN VEHICULE AUTOMOBILE PAR UN APPAREIL EXTERNE ET UNE PASSERELLE

(30) Priorität: 09.05.2000 DE 10022422
(43) Veröffentlichungstag der Anmeldung: 05.03.2003
(73) Patentinhaber: ROBERT BOSCH GMBH, 70442 Stuttgart (DE)
(72) Erfinder: VOLLMER, Vasco, 31188 Holle (DE); BAIERL, Wolfgang, 73630 Remshalden (DE)
(86) Internationale Anmeldenummer: PCT/DE2001/001384
(87) Internationale Veröffentlichungsnummer: WO 2001/085494

(56) Entgegenhaltungen:
- EP-A- 0 823 803
- EP-A- 0 941 894
- WO-A-00/09363
- WRIGHT M: "Auto electronics for a multimedia future" EDN MAGAZINE, 19. August 1999 (1999-08-19), XP002171999

## Beschreibung

### Stand der Technik

Die Erfindung geht aus von einem Verfahren zum Zugriff auf ein Gerät eines Kommunikationsnetzes in einem Kraftfahrzeug durch ein externes Gerät bzw. einem Gateway nach der Gattung des unabhängigen Patentanspruchs.

Es ist bereits bekannt, bei einem Zugriff eines externen Gerätes auf ein Kommunikationsnetz in einem Kraftfahrzeug ein Gateway zu verwenden, um negative Auswirkungen auf die Verfügbarkeit und die Stabilität des Kommunikationsnetzes und die an das Kommunikationsnetz angeschlossenen Komponenten zu vermeiden. Das Gateway übernimmt also Sicherungsfunktionen.

Aus der EP 0 941 894 A2 (nächsterStand der Technik gemäß Regel 27(1)6 EPÜ) ist eine Schaltungsanordnung zur Kommunikation und Diagnose einer Vielzahl elektrischer Komponenten in einem Kraftfahrzeug bekannt, die über ein Bussystem mit Gateways verfügt. Der Zugriff wird über die Gateways gesteuert. Zur Sicherung vor Zugriff von Unbefugten wird vorab ein Codewort abgefragt. Nach einer Überprüfung der Zugangsberechtigung durch den Prozessor, der dem Gateway zugeordnet ist, werden die Verbindungen freigeschaltet.

Bei der WO 00 09 363 A1 ist ein Firewall zwischen einem PC und dem Kraftfahrzeugbus vorgesehen. Der Firewall benutzt eine Verschlüsselungstechnik mittels Handshake zwischen PC Software und Firewall.

### Vorteile der Erfindung

Das erfindungsgemäße Verfahren zum Zugriff auf ein Gerät eines Kommunikationsnetzes in einem Kraftfahrzeug durch ein externes Gerät bzw. das erfindungsgemäße Gateway mit den Merkmalen des unabhängigen Patentanspruchs hat demgegenüber den Vorteil, dass in einfacher Weise durch ein

Softwareelement, das dem externen Gerät von dem Gateway überspielt wird, eine Schutz- und Sicherheitsfunktion der Daten erreicht wird. Dadurch wird eine geringe Komplexität des Gateways erzielt, da die Kommunikation zwischen dem externen Gerät und dem zu steuernden Gerät durch das Softwareelement vorgegeben ist. Dies hängt nun damit zusammen, dass die Sicherungsfunktionen für den Zugriff auf ein bestimmtes Gerät des Kommunikationsnetzes auf das Softwareelement verteilt wird, um damit das Gateway zu entlasten. Weiterhin zeigt ein solches System eine verteilte Intelligenz und damit eine geringere Komplexität der einzelnen Komponenten. Verteilte Intelligenz liegt daher vor, da die Sicherungsfunktionen nicht alle im Gateway oder einer anderen Funktion oder einem anderen Gerät konzentriert sind. Für jedes Gerät, das einen Zugriff durch ein externes Gerät ermöglicht liegt ein Softwareelement vor, um diese Sicherungsfunktionen zu übernehmen. Es wird also auf die verschiedenen Softwareelemente die Sicherungsfunktion und damit die Intelligenz, die die Sicherung ausmacht, verteilt. Damit wird der Grad der Verteilung der Intelligenz im Kommunikationsnetz weiter erhöht.

Durch die in den abhängigen Ansprüchen aufgeführten Maßnahmen und Weiterbildungen sind vorteilhafte Verbesserungen des im unabhängigen Patentanspruch angegebenen Verfahrens zum Zugriff auf ein Gerät eines Kommunikationsnetzes in einem Kraftfahrzeug durch ein externes Gerät bzw. des Gateways möglich.

Besonders vorteilhaft ist, dass das Gateway die Zugriffsmöglichkeit von dem angefragten Gerät direkt oder von einem Systemmanager erfragt. Alternativ kann die Anfrage auch direkt an das angefragte Gerät gestellt werden. Damit wird vorteilhafterweise diese Information nicht in das Gateway konzentriert, so dass das Gateway einfacher ausgelegt werden kann.

Darüber hinaus ist es von Vorteil, dass durch eine Verschlüsselung der übertragenen Daten von und zu dem externen Gerät und dem jeweils angefragten Gerät im Kommunikationsnetz eine erhöhte Sicherheit erzielt wird. Damit wird insbesondere das Abhören dieser Kommunikation erschwert.

Es ist weiterhin von Vorteil, dass das dem externen Gerät überspielte Softwareelement eine vorgegebene Gültigkeitsdauer aufweist. Damit wird erreicht, dass das Softwareelement nicht für beliebige Zeit verfügbar ist. Dies erhöht die Sicherheit vor Mißbrauch mit dem überspielten Softwareelement. Dadurch, dass das externe Gerät nach Ablauf der Gültigkeitsdauer eine erneute Anfrage starten muß, wird erneut die Berechtigung des Zugriffs überprüft. Dies kann durch eine zyklische Abfrage bei dem Gateway oder dem Systemmanager oder dem angefragten Gerät automatisiert werden. Damit kann insbesondere bei einem mißbräuchlichen Zugriff eine Weiterbenutzung des überspielten Softwareelements verhindert werden.

Desweiteren ist es von Vorteil, das Softwareelement mit einer plattformunabhängigen Programmiersprache zu erstellen, so dass das Softwareelement in beliebigen Hardwareumgebungen lauffähig ist. Wird hingegen das Softwareelement mit einer plattformspezifischen Programmiersprache hergestellt, so ist das Softwareelement auf den entsprechenden externen Geräten besonders schnell und effizient. Dies liegt dann vorteilhafterweise daran, dass eine plattformspezifische Programmiersprache verwendet wurde, die genau für dieses externe Gerät geeignet ist.

Darüber hinaus ist es von Vorteil, dass das Softwareelement mittels eines Kontrollmoduls und Daten eines an das Kommunikationsnetz des Kraftfahrzeugs angeschlossenen Geräts für dieses Gerät erzeugt wird. Damit ist eine adpative Verfahrensweise ermöglicht worden, die zu einem selbstkonfigurierbaren Kommunikationsnetz führt.

Darüber hinaus ist es von Vorteil, dass das Kommunikationsnetz als ein Bussystem betrieben wird, so dass weitere Komponenten einfach anschließbar sind. Ein Bussystem hat weiterhin den Vorteil, den Leitungsaufwand zu minimieren. Insbesondere von Vorteil ist es, wenn das Bussystem nach dem Standard IEEE 1394 ausgeführt ist. Damit liegt ein serieller Bus vor, der insbesondere für die Kraftfahrzeugtechnik entwickelt wurde. Dies schafft ein großes Anwendungsgebiet des erfindungsgemäßen Verfahrens zum Zugriff auf ein Gerät eines Kommunikationsnetzes in einem Kraftfahrzeug durch ein externes Gerät.

Weiterhin ist es von Vorteil, dass das externe Gerät Mittel zur Kommunikation mit dem Gateway bzw. Mittel zur Verwendung des Softwareelements aufweist, wodurch die Anwendung des erfindungsgemäßen Verfahren erst möglich wird.

### Zeichnung

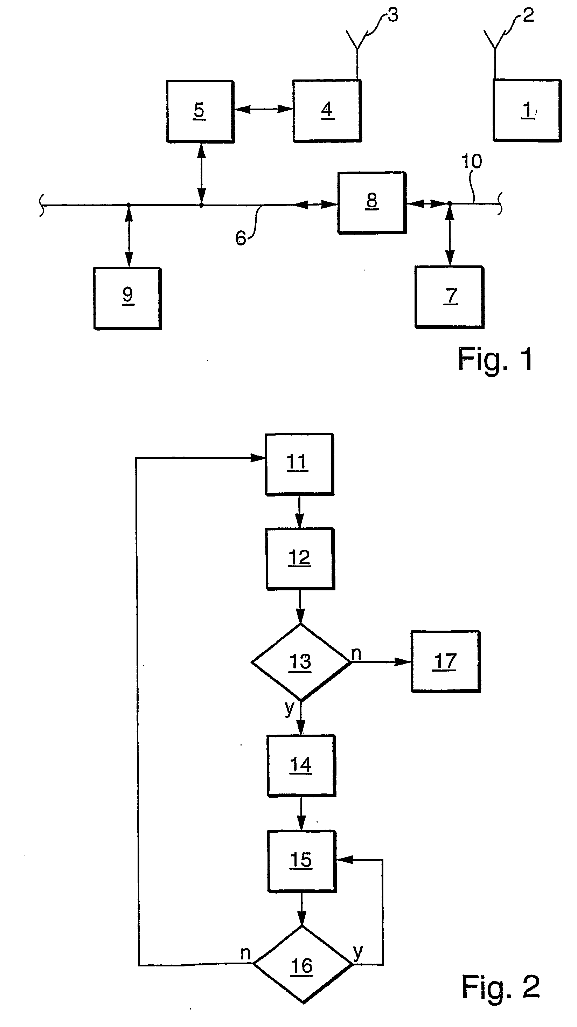

Ausführungsbeispiele der Erfindung sind in der Zeichnung dargestellt und in der nachfolgenden Beschreibung näher erläutert. Es zeigen Figur 1 den Aufbau eines Kommunikationsnetzes und Figur 2 ein Flußdiagramm des erfindungsgemäßen Verfahrens.

### Beschreibung

In der Kraftfahrzeugindustrie werden zunehmend Multimediakomponenten in ein Kraftfahrzeug integriert. Es werden jedoch dabei mehr und mehr portable und damit externe Geräte auf Geräte, die an ein Kommunikationsnetz im Kraftfahrzeug angeschlossen sind, Zugriff nehmen. Beispielsweise wird mit einem tragbaren digitalen Assistenten ein Abgleich einer Adreßdatenbank mit einer entsprechenden Datenbank im Kraftfahrzeug gewünscht. Andere Beispiele sind das Überspielen von Daten, insbesondere von Audio- und/oder Multimediadateien oder Navigationsdaten, die mit einem Heimrechner erzeugt wurden.

Um dabei jedoch negative Auswirkungen auf die Verfügbarkeit und die Stabilität des Kommunikationsnetzes zu verhindern, erfolgt der Zugriff von diesen externen Geräten über ein Gateway. Ein Gateway ist ein Modul, entweder hardwaremäßig oder softwaremäßig, das zwei unterschiedliche Kommunikationsnetze oder Kommunikationskomponenten miteinander verbindet. Insbesondere Sicherungsfunktionen sind in einem solchen Gateway vorzusehen, so dass ein Zugriff auf ein Kommunikationsnetz nicht zu unerwünschten Auswirkungen führt.

Erfindungsgemäß wird daher ein Verfahren zum Zugriff auf ein Gerät eines Kommunikationsnetzes in einem Kraftfahrzeug durch ein externes Gerät durchgeführt, wobei das Gateway des Kommunikationsnetzes die Zugriffsanfrage eines externen Geräts in der Weise behandelt, dass das Gateway überprüft, ob ein Zugriff auf ein angefragtes Gerät innerhalb des Kommunikationsnetzes möglich ist und, wenn dies der Fall ist, dass dann ein Softwareelement an das externe Gerät übertragen wird, um eine Kommunikation mit dem angefragten Gerät zu ermöglichen. Ist kein Zugriff möglich, wird dies dem externen Gerät von dem Gateway mitgeteilt.

Figur 1 zeigt den Aufbau eines Kommunikationsnetzes in einem Kraftfahrzeug. Ein externes Gerät 1 mit einer Antenne 2 zum Senden und Empfangen von Daten möchte auf ein Gerät des Kommunikationsnetzes zugreifen. Hier wird eine Funkverbindung genutzt, alternativ ist jedoch auch eine Infrarotverbindung oder ein Anschluß über ein Kabel oder ein Stecker möglich.

Das Kommunikationsnetz weist als die ersten beiden Geräte ein Gateway 4 mit einer Antenne 3 zum Senden und Empfangen und einen mit dem Gateway über einen ersten Datenein-/ausgang verbundenen Systemmanager 5 auf. Der Systemmanager 5 ist über seinen zweiten Datenein-/-ausgang mit einem Bussystem 6 verbunden, an das ein CD-Spieler 9 mittels seines Datenein-/-ausgangs angeschlossen ist. An das Bussystem 6 können weitere Komponenten angeschlossen werden, hier insbesondere andere Multimediakomponenten wie ein Navigationsgerät oder ein Autoradio. Die an den Bus 6 angeschlossenen Geräte weisen Buscontroller auf, die die Kommunikation über den Bus regeln.

Der Bus 6 ist hier ein Bussystem nach dem Standard IEEE 1394. Nach diesem Standard werden verschiedene Geräte oder Knoten über ein 4 bis 6 adriges Kabel oder einen Lichtwellenleiter angeschlossen. Ein Knoten kann dabei wahlweise als Endstück oder als Relaisknoten ausgeführt sein. Dadurch ist es möglich, eine geeignete Topologie des Kommunikationsnetzes aufzubauen. Ein Knoten verarbeitet die Informationen, die mit seiner eigenen Adresse versehen sind. Alle Informationen, die der Knoten auf einem Port empfängt, versendet der Knoten über seine anderen Ports, falls mehrere solcher Ports vorliegen, wie es beim Relaisknoten der Fall ist. Nach IEEE 1394 ist das Kommunikationsnetz selbstkonfigurierend, d.h. alle Knoten im Kommunikationsnetz senden nach einem Neustart Informationen über sich selbst in das Kommunikationsnetz. Alternativ ist auch der MOST-Bus einsetzbar.

An das Bussystem 6 ist über einen Datenein-/-ausgang ein Gateway 8 angeschlossen. Das Gateway 8 ist die Schnittstelle zwischen dem Bussystem 6 und einem weiteren Bussystem 10. Das Gateway 8 sorgt für den Datentransfer zwischen diesen beiden Bussystemen. An das Bussystem 10 ist hier beispielhaft eine Ortungsvorrichtung 7 angeschlossen.

Der Systemmanager 5, der entweder als getrennte Einheit mit eigener Hardware und Software vorliegt oder nur als eigenes Softwareprogramm auf einem Rechner des Kraftfahrzeugs, steuert die Komponenten CD-Spieler 9 und die Ortungsvorrichtung 7. Liegen für diese Komponenten keine Softwareelemente zur Steuerung vor, dann erzeugt der Systemmanager 5 mittels eines Kontrollmoduls und in dem betreffenden Gerät abgespeicherter Daten ein solches Softwareelement, das die Steuerung erlaubt. Diese Softwareelemente können auch von anderen Geräten verwendet werden, um die jeweiligen Geräte zu steuern. Der Systemmanager 5 hat dabei Sorge zu tragen, dass nicht zwei Geräte zur gleichen Zeit auf ein zu steuerndes Gerät zugreifen.

Das Softwareelement kann einerseits mit einem plattformunabhängigen Code erstellt werden, so dass das Softwareelement auf jeder Hardwareplattform laufen wird oder das Softwareelement wird mittels eines plattformspezifischen Codes erstellt, so dass für bestimmte externe Geräte, z.B. ein persönlicher digitaler Assistent, ein solches Softwareelement erstellt wird, um auf diesem besonderen Gerät schnell und fehlerfrei zu laufen. Dies bringt auch den Vorteil mit sich, dass nur bestimmte Geräte auf das Kommunikationsnetz im Kraftfahrzeug zugreifen können. Zu solchen Geräten gehören beispielsweise ein persönlicher digitaler Assistent, ein Laptop, ein Notebook und ein Mobiltelefon.

In Figur 2 wird das erfindungsgemäße Verfahren zum Zugriff auf ein Gerät eines Kommunikationsnetzes in einem Kraftfahrzeug durch ein externes Gerät als Flußdiagramm dargestellt. In Verfahrensschritt 11 fragt das externe Gerät 1 das Gateway 4 über die Funkschnittstelle an, dass es Zugriff auf ein Gerät des Kommunikationsnetzes haben möchte. Das Gateway 4 verfügt über eine Liste der verfügbaren Komponenten des Kommunikationsnetzes, die einen Zugriff über ein externes Gerät ermöglichen. Diese Liste überträgt das Gateway 4 an das externe Gerät 1 (Verfahrensschritt 12). In Verfahrensschritt 13 gibt das externe Gerät 1 nun an, welches Gerät des Kommunikationsnetzes es steuern möchte und das ist in diesem Fall der CD-Spieler 9. In Verfahrensschritt 13 überprüft dann das Gateway 4, ob ein Zugriff auf den CD-Spieler 9 möglich ist. Diese Information weist das Gateway 4 entweder selbst auf, oder das Gateway 4 fragt den Systemmanager 5 oder das zu steuernde Gerät, den CD-Spieler 9, selbst an.

Ist eine Steuerung durch ein externes Gerät nicht möglich, dann wird in Verfahrensschritt 17 dem externen Gerät 1 mitgeteilt, dass der Zugriff nicht möglich ist. Dies kann an einer generellen Nichtverfügbarkeit des Geräts liegen oder das externe Gerät ist nicht berechtigt, einen Zugriff durchzuführen. Bei der Anfrage des externen Geräts 1 gibt sich das externe Gerät zu erkennen. Bei bestimmten oder bei allen Geräten kann eine Codeabfrage vorgesehen sein, um einen unberechtigten Zugriff zu verhindern. Diese Codeabfrage kann auch durch einen Chip erfolgen, der das Kommunikationsnetz im Kraftfahrzeug als ganzes für einen externen Zugriff empfänglich macht. Dazu wird der Chip entweder in das externe Gerät 1 oder in ein Gerät des Kommunikationsnetzes eingeführt, um analog zu einer Keycard bei den heutigen Autoradios einen berechtigen Zugriff und Betrieb zu ermöglichen.

Ist ein Zugriff auf den CD-Spieler 9 durch das externe Gerät 1 jedoch möglich, wird in Verfahrensschritt 14 ein Softwareelement, das die Steuerung des CD-Spielers 9 durch das externe Gerät 1 ermöglicht, von dem Gateway 4 an das externe Gerät 1 übertragen. Das Softwareelement stellt eine ausführbare Datei dar, die nur für die Kommunikation mit dem CD-Spieler 9 nutzbar ist. Liegt das Softwareelement für den CD-Spieler 9 nicht vor, dann kann der Systemmanager 5 anhand von im CD-Spieler 9 abgespeicherter Daten und einem Kontrollmodul ein solches Softwareelement erzeugen. Damit wird eine Erzeugung des Softwareelements bei Bedarf möglich, und es können so Speicherressourcen eingespart werden.

In Verfahrensschritt 15 wird dann die Steuerung des CD-Spielers 9 durch das externe Gerät 1 mittels des übertragenen Softwareelements durchgeführt. In Verfahrensschritt 16 wird dabei überprüft, ob das Softwareelement immer noch Gültigkeit besitzt. Ist das der Fall, dann wird in Verfahrensschritt 15 fortgefahren, die Steuerung des CD-Spielers 9 vorzunehmen. Ist die Gültigkeit des Softwareelements jedoch abgelaufen, dann wird zu Verfahrensschritt 11 zurückgesprungen, um eine erneute Anfrage zur Steuerung des CD-Spielers 9 durchzuführen. Solch eine Gültigkeitsdauer kann beispielsweise eine Stunde betragen.

Die Anfrage nach Ablauf der Gültigkeitsdauer kann auch zyklisch geschehen und zwar dadurch, dass das externe Gerät 1 entweder bei dem Gateway 4 oder dem Systemmanager 5 oder dem angefragten Gerät, hier der CD-Spieler 9, überprüft.

Dabei ist dann die Gültigkeitsdauer nicht im Softwareelement selbst enthalten, sondern in einer Instanz im Kommunikationsnetz. Dies erhöht die Sicherheit erheblich. Das ist insbesondere im Hinblick auf eine Manipulation der Gültigkeitsdauer zu sehen. Liegt die Feststellung der Gültigkeitsdauer im Kommunikationsnetz ist eine willkürliche Veränderung der Gültigkeitsdauer weitaus schwieriger, als wenn die Feststellung der Gültigkeitsdauer im externen Gerät 1 stattfindet. Im letzteren Fall ist eine Manipulation bedeutend einfacher.

Bei der Kommunikation zwischen dem externen Gerät 1 und dem CD-Spieler 9 können die Daten auch durch das externe Gerät 1 und den CD-Spieler 9 jeweils verschlüsselt bzw. entschlüsselt werden. Verschlüsselungsdaten können dabei vorteilhafterweise mit dem Softwareelement übertragen werden, wobei die Verschlüsselung vorteilhafterweise mit einer Berechtigung zum Zugang zum Kommunikationsnetz gekoppelt sein kann, was die Sicherheit weiter erhöht. Dies erschwert ein Abhören der Kommunikation erheblich. Auf die vorgegebene Gültigkeitsdauer kann auch verzichtet werden, um den Datenverkehr zu reduzieren und einem Nutzer einen größeren Freiraum zu verschaffen.

Wird für das Softwareelement ein plattformunabhängiger Code verwendet, bittet sich eine Verwendung von Java an. Wird ein plattformspezifischer Code verwendet, dann sind insbesondere Codes für Palm OS oder Windows CE geeignet, da dies Betriebssysteme sind, die für den Betrieb von portablen Geräten, wie sie als Ausführungsformen für das externe Gerät 1 oben genannt wurden, insbesondere konzipiert wurden.

## Patentansprüche

1. Verfahren zum Zugriff auf ein Gerät eines Kommunikationsnetzes in einem Kraftfahrzeug durch ein externes Gerät (1), wobei der Zugriff des externen Geräts (1) über ein Gateway (4) des Kommunikationsnetzes gesteuert wird, wobei nach einer Zugriffsanfrage von dem externen Gerät (1) das Gateway (4) Informationen über die im Kommunikationsnetz verfügbaren Geräte an das externe Gerät (1) überträgt, wobei von dem Gateway (4) überprüft wird, ob das von dem externen Gerät (1) angefragte Gerät einen Zugriff ermöglicht, wobei wenn ein Zugriff auf das angefragte Gerät möglich ist, ein Softwareelement zu dem externen Gerät (1) übertragen wird, um eine Kommunikation zwischen dem externen Gerät (1) und dem angefragten Gerät zu ermöglichen, wobei das Softwareelement die Sicherungsfunktionen übernimmt, und wobei, wenn kein Zugriff auf das angefragte Gerät möglich ist, dies dem externen Gerät (1) von dem Gateway (4) mitgeteilt wird.

2. Verfahren nach Anspruch 1, **dadurch gekennzeichnet, dass** das Gateway (4) die Zugriffsmöglichkeit von dem angefragten Gerät direkt oder von einem Systemmanager (5) erfragt.

3. Verfahren nach Anspruch 1 oder 2, **dadurch gekennzeichnet, dass** bei der Kommunikation zwischen dem externen Gerät (1) und dem angefragten Gerät eine Verschlüsselung eingesetzt wird.

4. Verfahren nach Anspruch 1 oder 2, **dadurch gekennzeichnet, dass** das Softwareelement mit einer vorgegebenen Gültigkeitsdauer versehen wird und dass nach Ablauf der Gültigkeitsdauer eine neue Anfrage des externen Geräts (1) zur Fortsetzung der Kommunikation durchgeführt wird.

5. Verfahren nach Anspruch 4, **dadurch gekennzeichnet, dass** die Gültigkeitsdauer des Softwareelements durch zyklische Anfragen bei dem Gateway (4) oder dem Systemmanager (5) oder dem angefragten Gerät überprüft wird.

6. Verfahren nach einem der Ansprüche 1 bis 5, **dadurch gekennzeichnet, dass** das Softwareelement in einer plattformunabhängigen Programmiersprache erstellt wird.

7. Verfahren nach einem der Ansprüche 1 bis 5, **dadurch gekennzeichnet, dass** ein plattformspezifischer Code für das Softwareelement verwendet wird.

8. Verfahren nach einem der vorhergehenden Ansprüche, **dadurch gekennzeichnet, dass**, wenn für ein Gerät in dem Kommunikationsnetz kein Softwareelement vorliegt, ein neues Softwareelement für das Gerät anhand in dem Gerät abgespeicherter Daten und einem Kontrollmodul erzeugt wird.

9. Verfahren nach einem der vorhergehenden Ansprüche, **dadurch gekennzeichnet, dass** als Kommunikationsnetz ein Bussystem verwendet wird.

10. Verfahren nach Anspruch 9, **dadurch gekennzeichnet, dass** als Bussystem IEEE 1394 verwendet wird.

11. Gateway zur Zugriffssteuerung eines Geräts in einem Kommunikationsnetz in einem Kraftfahrzeug durch ein externes Gerät, wobei von dem Gateway (4) nach einer Zugriffsanfrage von dem externen Gerät (1) an das externe Gerät (1) Informationen über die im Kommunikationsnetz verfügbaren Geräte übertragbar sind, wobei von dem Gateway (4) überprüfbar ist, ob das von dem externen Gerät (1) angefragte Gerät einen Zugriff durch das externe Gerät (1) gestattet, wobei von dem Gateway (4) im Falle eines möglichen Zugriffs auf das angefragte Gerät ein Softwareelement zu dem externen Gerät (1) übertragbar ist, um eine Kommunikation zwischen dem externen Gerät und dem angefragten Gerät zu ermöglichen, wobei das Softwareelement die Sicherungsfunktionen übernimmt und wobei, wenn kein Zugriff möglich ist, dies dem externen Gerät (1) durch das Gateway (4) mitteilbar ist.

12. Externes Gerät nach Anspruch 11, **dadurch gekennzeichnet, dass** das externe Gerät (1) Mittel zur Kommunikation mit dem Gateway (4) und Mittel zur Vewendung des Softwareelements aufweist.

## Claims

1. Method for an external appliance (1) to access an appliance in a communication network in a motor vehicle, where the access by the external appliance (1) is controlled via a gateway (4) in the communication network, where an access request from the external appliance (1) is followed by the gateway (4) transmitting information about the appliances available in the communication network to the external appliance (1), where the gateway (4) checks whether the appliance requested by the external appliance (1) allows access, where if access to the requested appliance is possible then a software element is transmitted to the external appliance (1) in order to allow communication between the external appliance (1) and the requested appliance, where the software element undertakes the protection functions, and where if it is not possible to access the requested appliance then this is communicated to the external appliance (1) by the gateway (4).

2. Method according to Claim 1, **characterized in that** the gateway (4) ascertains whether access is possible from the requested appliance directly or from a system manager (5).

3. Method according to Claim 1 or 2, **characterized in that** encryption is used for the communication between the external appliance (1) and the requested appliance.

4. Method according to Claim 1 or 2, **characterized in that** the software element is provided with a prescribed validity period, and **in that** when the validity period has expired a new request is made by the external appliance (1) to continue the communication.

5. Method according to Claim 4, **characterized in that** the software element's validity period is checked by cyclic requests to the gateway (4) or to the system manager (5) or to the requested appliance.

6. Method according to one of Claims 1 to 5, **characterized in that** the software element is created in a platform-independent programming language.

7. Method according to one of Claims 1 to 5, **characterized in that** a platform-specific code is used for the software element.

8. Method according to one of the preceding claims, **characterized in that** if there is no software element for an appliance in the communication network then a new software element is produced for the appliance using data stored in the appliance and a control module.

9. Method according to one of the preceding claims, **characterized in that** the communication network used is a bus system.

10. Method according to Claim 9, **characterized in that** the bus system used is IEEE 1394.

11. Gateway for an external appliance to control access to an appliance in a communication network in a motor vehicle, where the gateway (4) can follow an access request from the external appliance (1) by transmitting information about the appliances available in the communication network to the external appliance (1), where the gateway (4) can check whether the appliance requested by the external appliance (1) permits access by the external appliance (1), where in the event of access to the requested appliance being possible the gateway (4) can transmit a software element to the external appliance (1) in order to allow communication between the external appliance and the requested appliance, where the software element undertakes the protection functions, and where if access is not possible then this can be communicated to the external appliance (1) by the gateway (4).

12. External appliance, according to claim 11 **characterized in that** the external appliance (1) has means for communicating with the gateway (4) and means for using the software element.

## Revendications

1. Procédé pour accéder à un appareil d'un réseau de communications dans un véhicule automobile par l'intermédiaire d'un appareil externe (1),
selon lequel
l'accès de l'appareil externe (1) est commandé par une passerelle (4) du réseau de communications,
la passerelle (4) transmet à cet appareil externe (1) des informations sur les appareils disponibles dans le réseau de communications, après une demande d'accès faite par l'appareil externe (1),
on vérifie, par la passerelle (4), si l'appareil interrogé par l'appareil externe (1) permet un accès,
un élément de logiciel est transmis à l'appareil externe (1) pour permettre une communication entre l'appareil externe (1) et l'appareil interrogé, lorsqu'un accès à l'appareil interrogé est possible
l'élément de logiciel prend en charge les fonctions de sécurité, et
lorsqu'aucun accès à l'appareil interrogé n'est possible, la passerelle (4) le notifie à l'appareil externe (1).

2. Procédé selon la revendication 1,
**caractérisé en ce que**
la passerelle (4) demande la possibilité d'accéder directement par l'appareil interrogé ou par le biais d'un gestionnaire de système (5).

3. Procédé selon la revendication 1 ou 2,
**caractérisé en ce que**,
lors d'une communication entre l'appareil externe (1) et l'appareil interrogé, un codage est mis en place.

4. Procédé selon la revendication 1 ou 2,
**caractérisé en ce que**
l'élément de logiciel a une durée de validité prédéterminée et, après l'écoulement de la durée de validité, une nouvelle demande de l'appareil externe (1) est effectuée pour poursuivre la communication.

5. Procédé selon la revendication 4,
**caractérisé en ce que**
la durée de validité de l'élément de logiciel est vérifiée par des demandes cycliques effectuées par la passerelle (4) ou le gestionnaire de système (5) ou l'appareil interrogé.

6. Procédé selon l'une des revendications 1 à 5,
**caractérisé en ce que**
l'élément de logiciel est produit dans un langage de programmation indépendant de la plate-forme.

7. Procédé selon l'une des revendications 1 à 5,
**caractérisé en ce qu'**
on utilise un code spécifique à la plate-forme pour l'élément de logiciel.

8. Procédé selon l'une des revendications précédentes,
**caractérisé en ce que**,
lorsqu'il n'y a aucun élément de logiciel pour un appareil dans le réseau de communications, un nouvel élément de logiciel est généré pour l'appareil au moyen de données archivées dans l'appareil et d'un module de contrôle.

9. Procédé selon l'une des revendications précédentes,
**caractérisé en ce que**
le réseau de communications est un système bus.

10. Procédé selon la revendication 9,
**caractérisé en ce qu'**
on utilise un système bus IEEE 1394.

11. Passerelle de commande d'accès d'un appareil dans un réseau de communications dans un véhicule automobile par l'intermédiaire d'un appareil externe,
selon laquelle
après une demande d'accès faite par l'appareil externe (1), des informations sur les appareils disponibles dans le réseau de communications peuvent être transmises à l'appareil externe (1) par la passerelle (4),
il est possible de vérifier par la passerelle (4) si l'appareil interrogé par l'appareil externe (1) autorise un accès par l'appareil externe (1),
un élément de logiciel peut être transmis à l'appareil externe (1) par la passerelle (4) dans le cas où un accès à l'appareil interrogé est possible, pour permettre une communication entre l'appareil externe (1) et l'appareil interrogé,
l'élément de logiciel prend en charge les fonctions de sécurité, et
lorsqu'aucun accès n'est possible, la passerelle (4) peut le notifier à l'appareil externe (1).

12. Appareil externe selon la revendication 11,
**caractérisé en ce que**
l'appareil externe (1) présente des moyens pour communiquer avec la passerelle (4) et des moyens pour utiliser l'élément de logiciel.
